# EUROPÄISCHE PATENTSCHRIFT

(11) **EP 2 247 477 B1**
(45) Veröffentlichungstag und Bekanntmachung des Hinweises auf die Patenterteilung: **23.09.2015**
(21) Anmeldenummer: 09713428.2
(22) Anmeldetag: 13.02.2009
(51) Int. Cl.: B60T 8/1755

(54) **VERFAHREN UND VORRICHTUNG ZUM STABILISIEREN EINES FAHRZEUGS**
METHOD AND DEVICE FOR STABILIZING A VEHICLE
PROCÉDÉ ET DISPOSITIF POUR STABILISER UN VÉHICULE

(30) Priorität: 22.02.2008 DE 102008010665
(43) Veröffentlichungstag der Anmeldung: 10.11.2010
(73) Patentinhaber: Continental Teves AG & Co. oHG, 60488 Frankfurt am Main (DE)
(72) Erfinder: BATISTIC, Ivica, 60385 Frankfurt (DE)
(86) Internationale Anmeldenummer: PCT/EP2009/051720
(87) Internationale Veröffentlichungsnummer: WO 2009/103665

(56) Entgegenhaltungen:
- WO-A-99/58382
- DE-A1- 4 112 284
- DE-A1- 19 754 898
- DE-A1- 19 820 107
- US-A- 5 826 951

## Beschreibung

### Technisches Gebiet

Die Erfindung betrifft ein Verfahren und eine Vorrichtung zum Stabilisieren eines Fahrzeugs. Die Vorrichtung ist zur Durchführung des Verfahrens in einem Fahrzeug geeignet. Bei dem Fahrzeug kann es sich um ein Kraftfahrzeug handeln.

### Hintergrund der Erfindung

Moderne Kraftfahrzeuge sind oftmals mit einem Fahrdynamikregelsystem ausgestattet, wie beispielsweise dem bekannten ESP-System (ESP: Elektronisches Stabilitätsprogramm), das insbesondere in der DE 195 150 51 A1 beschrieben wird. Derartige Fahrdynamikregelsysteme dienen dazu, das Fahrzeug in kritischen Fahrsituationen zu stabilisieren. Üblicherweise wird zu diesem Zweck die Bremskraft an einzelnen Rädern des Fahrzeugs gezielt erhöht, um ein das Fahrzeug stabilisierendes Giermoment zu erzeugen. Bei Fahrzeugen mit hydraulischen Bremsanlagen wird zur Erhöhung der Bremskraft eine in die Bremsanlage integrierte Hydraulikeinheit eingesetzt, welche eine Pumpe umfasst, die einen radindividuellen Bremsdruckaufbau unabhängig von einer Bremsenbetätigung des Fahrers ermöglicht.

Der Betrieb der Hydraulikpumpe ist mit Geräuschen und Vibrationen verbunden und ist bei einer Betätigung des üblicherweise zur Bedienung der Bremsanlage vorgesehenen Bremspedals von dem Fahrer deutlich spürbar. In der Regel geht der Betrieb der Hydraulikpumpe daher mit Komforteinbußen für den Fahrer des Fahrzeugs einher. Insbesondere aus diesem Grund werden die Regeleintrittsschwellen der Fahrdynamikregelung typischerweise so gewählt, dass Eingriffe nur dann vorgenommen werden, wenn das Fahrzeugverhalten in relativ hohem Maße von einem Sollverhalten abweicht.

Ein Verfahren und eine Vorrichtung gemäß dem Oberbegriff der unabhängigen Ansprüche 1 und 11 ist aus der DE 198 20 107 A1 bekannt.

### Darstellung der Erfindung

Es ist eine Aufgabe der vorliegenden Erfindung, eine komfortablere Stabilisierung eines Kraftfahrzeugs bei sicherheitskritischen Fahrzuständen zu ermöglichen.

Die Aufgabe wird durch ein Verfahren mit den Merkmalen des Patentanspruchs 1 und durch eine Vorrichtung mit den Merkmalen des Patentanspruchs 11 gelöst. Ausführungsformen des Verfahrens und der Vorrichtung sind in den abhängigen Ansprüchen angegeben.

Gemäß einem ersten Aspekt der Erfindung wird ein Verfahren zum Stabilisieren eines Kraftfahrzeugs vorgeschlagen, das über eine Bremsanlage verfügt, die von einem Fahrer des Fahrzeugs betätigbar ist, um an wenigstens zwei Fahrzeugrädern eine Bremskraft zu bewirken. Während einer Bremsenbetätigung des Fahrers wird an einem ersten Fahrzeugrad einer Achse ein Aufbau einer der Fahrervorgabe entsprechenden Bremskraft zugelassen und an einem zweiten Fahrzeugrad der Achse eine gegenüber der Fahrervorgabe verringerte Bremskraft eingestellt, wenn die Erfüllung eines Aktivierungskriteriums festgestellt wird.

Gemäß einem weiteren Aspekt der Erfindung wird eine Vorrichtung zum Stabilisieren eines Fahrzeugs mit einer Bremsanlage bereitgestellt, die von einem Fahrer des Fahrzeugs betätigbar ist, um an wenigstens zwei Fahrzeugrädern eine Bremskraft zu bewirken. Die Vorrichtung umfasst eine Steuerungseinrichtung, die dazu ausgestaltet ist, während einer Bremsenbetätigung des Fahrers aufgrund einer Feststellung, dass wenigstens ein Aktivierungskriterium erfüllt ist, einen Aktor zu steuern. Der Aktor ist dazu ausgestaltet, aufgrund der Steuerung an einem ersten Fahrzeugrad einer Achse den Aufbau einer der Fahrervorgabe entsprechenden Bremskraft zuzulassen und an einem zweiten Fahrzeugrad der Achse eine gegenüber der Fahrervorgabe verringerte Bremskraft einzustellen.

Die Erfindung beruht darauf, das Fahrzeug dadurch zu stabilisieren, dass an einer Achse eine Bremskraftdifferenz eingestellt wird. Diese führt zu einem auf das Fahrzeug wirkenden Giermoment, das Fahrzeuginstabilitäten entgegenwirken kann. Dabei beinhaltet die Erfindung die Idee, die Bremskraftdifferenz herbeizuführen, indem an einem Fahrzeugrad eine gegenüber der Fahrervorgabe verringernde Bremskraft eingestellt wird. Eine Erhöhung der Bremskraft gegenüber der Fahrervorgabe und die damit verbundenen Nachteile, insbesondere die entstehenden Komforteinbußen, werden damit vermieden. Die Erfindung kann damit auch bereits bei geringeren Fahrzeuginstabilitäten eingesetzt werden.

In einer Ausgestaltung handelt es sich bei der Achse um eine Hinterachse des Fahrzeugs und bei dem zweiten Fahrzeugrad um das kurveninnere Hinterrad. Anhand einer verringerten Bremskraft an dem kurveninneren Hinterrad kann eine wirkungsvolle Stabilisierung des Fahrzeugs während einer Kurvenfahrt erzielt werden, insbesondere kann einem Übersteuern des Fahrzeugs entgegengewirkt werden.

Um die Bremskraft an dem zweiten Fahrzeugrad gegenüber der Fahrervorgabe zu verringern, sieht eine Ausgestaltung des Verfahrens und der Vorrichtung vor, dass eine von dem Fahrer in einem Zeitpunkt eingestellte Bremskraft gehalten wird. In späteren Zeitpunkten während des Bremsvorgangs ist die Bremskraft damit gegenüber der Fahrervorgabe verringert. An dem ersten Fahrzeugrad folgt die Bremskraft der Fahrervorgabe, so dass die gewünschte Bremskraftdifferenz eingestellt wird. Ein Vorteil dieser Ausgestaltung besteht darin, dass weder ein aktiver Bremskraftaufbau noch ein aktiver Bremskraftabbau an dem zweiten Fahrzeugrad vorgenommen wird, wodurch Komforteinbußen vermieden werden, die durch den Betrieb eines die Bremskraft erhöhenden oder die Bremskraft verringernden Aktors herbeigeführt werden können.

Eine Ausführungsform des Verfahrens und der Vorrichtung ist dadurch gekennzeichnet, dass die Bremsanlage des Fahrzeugs Radbremsen umfasst, welche den Fahrzeugrädern zugeordnet sind und Druckmittel aufnehmen können, um eine Bremskraft zu erzeugen, und dass die Radbremse des zweiten Fahrzeugrads abgesperrt wird, um die Bremskraft konstant zu halten. Insbesondere kann die Bremsanlage hierbei etwa als hydraulische Bremsanlage mit flüssigem Druckmittel oder als pneumatische Bremsanlage mit gasförmigem Druckmittel ausgeführt sein. Die Bremskraft an dem zweiten Fahrzeugrad kann bei derartigen Bremsanlagen in einfacher Weise dadurch konstant gehalten werden, dass diese Radbremse abgesperrt wird, so dass sie kein Druckmittel mehr aufnimmt.

In einigen Fahrsituationen kann die Bremskraftdifferenz, die dadurch erzielt wird, dass die Bremskraft an dem zweiten Fahrzeugrad konstant gehalten wird, zu gering sein, um das Fahrzeug zu stabilisieren. Dies kann insbesondere dann der Fall sein, wenn der Fahrer die Bremskraft an dem ersten Fahrzeugrad nicht in ausreichender Weise erhöht. Daher zeichnet sich eine Weiterbildung des Verfahrens und der Vorrichtung dadurch aus, dass die Bremskraft an dem zweiten Fahrzeugrad gegenüber der gehaltenen Bremskraft verringert wird, wenn festgestellt wird, dass aufgrund der konstant gehaltenen Bremskraft keine ausreichende Stabilisierung des Fahrzeugs erreicht worden ist. Vorteilhaft ist in dieser Weiterbildung ein zweistufiges Verfahren vorgesehen, bei dem die Bremskraft an dem zweiten Fahrzeugrad zunächst konstant gehalten und nachfolgend verringert wird, wenn eine vorhandene Instabilität nicht beseitigt werden kann.

Eine verbundene Ausgestaltung des Verfahrens und der Vorrichtung sieht vor, dass die Bremskraft verringert wird, wenn ein Übersteuern des Fahrzeugs festgestellt wird, während die Bremskraft konstant gehalten wird. In diesem Fall kann davon ausgegangen werden, dass eine ausreichende Stabilisierung des Fahrzeugs nicht erzielt werden konnte.

Von einer bereits vorliegenden oder drohenden Instabilität des Fahrzeugs kann insbesondere bei einer hohen Querbeschleunigung des Fahrzeugs ausgegangen werden. Daher beinhaltet eine Ausführungsform des Verfahrens und der Vorrichtung, dass die Erfüllung eines Aktivierungskriteriums festgestellt wird, wenn ein Betrag einer Querbeschleunigung des Fahrzeugs einen vorgegebenen ersten Schwellenwert überschreitet.

Eine verbundene Ausgestaltung des Verfahrens und der Vorrichtung ist dadurch gekennzeichnet, dass der erste Schwellenwert in Abhängigkeit einer Gierbeschleunigung des Fahrzeugs ermittelt wird, wobei insbesondere mit steigender Gierrate eine Verringerung des ersten Schwellenwerts vorgenommen wird. Hierdurch wird berücksichtigt, dass insbesondere bei Vorliegen eines geringeren Fahrbahnreibwerts auch bei geringeren Querbeschleunigungen bereits eine Instabilität des Fahrzeugs vorliegen kann, wenn das Fahrzeug eine hohe Gierbeschleunigung aufweist.

Eine weitere Ausgestaltung des Verfahrens und der Vorrichtung zeichnet sich dadurch aus, dass die Erfüllung eines Aktivierungskriteriums festgestellt wird, wenn ein Übersteuern des Fahrzeugs ermittelt wird. Wie zuvor bereits erwähnt, ist ein Übersteuern in der Regel mit einem instabilen Fahrverhalten verbunden und führt daher zur Einstellung der Bremskraftdifferenz.

Darüber hinaus beinhaltet eine Weiterbildung des Verfahrens und der Vorrichtung, dass die Erfüllung eines Aktivierungskriteriums festgestellt wird, wenn in einer Situation ermittelt wird, dass das Fahrzeugverhalten von einem Untersteuern zu einem Übersteuern wechselt. Ein derartiger Wechsel des Fahrverhaltens des Fahrzeugs wird von durchschnittlich geübten Fahrern in der Regel nicht vorausgesehen und führt regelmäßig dazu, dass diese Fahrer das Fahrzeug nicht mehr beherrschen können. Vorteilhaft wird das Fahrzeug daher in derartigen Situationen durch den Aufbau einer Bremskraftdifferenz stabilisiert.

Erfindungsgemäß wird das Verfahren und die Vorrichtung dadurch gekennzeichnet, dass die Erfüllung eines Aktivierungskriteriums festgestellt wird, wenn bei oder nach einem ermittelten untersteuernden Fahrzeugverhalten festgestellt wird, dass ein gefilterter Wert einer Abweichung zwischen einer erfassten Gierrate und einer modellbasierten Sollgierrate einen ungefilterten Wert der Abweichung um mehr als einen vorbestimmten Wert überschreitet. Hierdurch kann ein Wechsel von einem untersteuernden Fahrverhalten in ein übersteuerndes Verhalten zuverlässig festgestellt werden. Bei dem vorbestimmten Wert kann es sich beispielsweise um eine vorgegebene prozentuale Abweichung handeln. Die herangezogene Sollgierrate beschreibt das Sollverhalten des Fahrzeugs bei einer vorgegebenen Geschwindigkeit und einem vorgegebenen Kurvenradius bzw. einem vorgegebenen Radeinschlagswinkel der lenkbaren Räder des Fahrzeugs.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

### Kurze Beschreibung der Figuren

Von den Figuren zeigt:
- Fig. 1: eine schematische Darstellung eines Kraftfahrzeugs mit einem System zum Stabilisieren des Fahrzeugs bei einem Bremsvorgang während einer Kurvenfahrt und
- Fig. 2: eine schematische Blockdarstellung von Komponenten des Systems.

### Darstellung von Ausführungsbeispielen

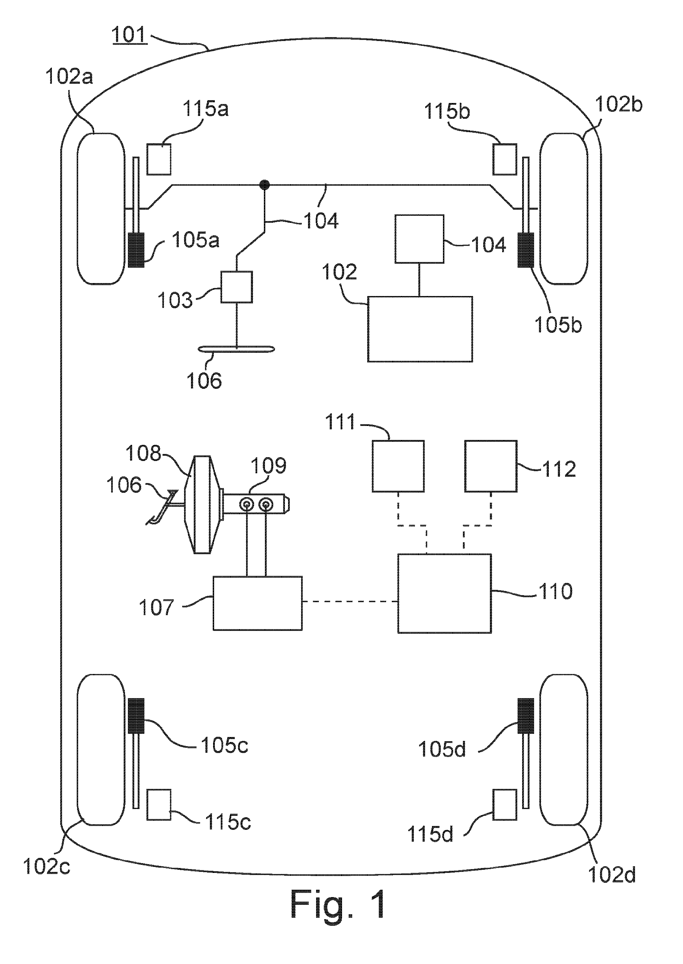

Figur 1 zeigt schematisch ein Kraftfahrzeug 101, das in der beispielhaften Darstellung über zwei Vorderräder 102a,b und zwei Hinterräder 102c,d verfügt. Die Vorderräder 102a,b, sind lenkbar ausgeführt, und der Radeinschlagswinkel kann von dem Fahrer des Kraftfahrzeugs 101 mittels einer Lenkhandhabe 103 eingestellt werden, die über einen Lenkstrang 104 mit den Vorderrädern 102a,b verbunden ist. Vorzugsweise handelt es sich bei der Lenkhandhabe 103 um ein Lenkrad.

Das Fahrzeug 101 wird durch einen in der Figur nicht dargestellten Antriebsmotor angetrieben, bei dem es sich beispielsweise um einen Verbrennungsmotor, einen Elektromotor oder einen Hybridmotor handeln kann. Der Antriebsmotor erzeugt ein Drehmoment, das über einen in der Figur 1 ebenfalls nicht dargestellten Antriebsstrang an zwei oder vier Fahrzeugräder 102a-d übertragen wird, um diese Räder 102a-d anzutreiben.

Um das Fahrzeug 101 abzubremsen, ist eine Bremsanlage vorgesehen. Diese umfasst Radbremsen 105a-d, die jeweils einem Rad 102a-d zugeordnet sind. Bei einer Betätigung einer Radbremse 105a-d wird das zugehörige Rad 102a-d mit einem Bremsmoment beaufschlagt und dadurch abgebremst. Die Bremsanlage umfasst zudem eine Betätigungseinrichtung 106, die von dem Fahrer des Fahrzeugs 101 betätigt werden kann und vorzugsweise als ein Bremspedal ausgestaltet ist. Mithilfe der Betätigungseinrichtung 106 kann von dem Fahrer ein Bremsmoment in den Radbremsen 105a-d eingestellt werden, dessen Höhe sich aus dem Ausmaß der Betätigung ergibt. Zudem ist ein Aktor vorgesehen, mit dem die von den Radbremsen 105a-d erzeugten Bremsmomente gegenüber der Fahrervorgabe verändert werden können. Dabei ermöglicht der Aktor insbesondere eine Verringerung der erzeugten Bremsmomente gegenüber der Fahrervorgabe. Darüber hinaus kann es auch vorgesehen sein, dass der Aktor dazu in der Lage ist, die Bremsmomente gegenüber der Fahrervorgabe zu erhöhen und die Radbremsen 105a-d zu betätigen, wenn keine fahrerseitige Betätigung der Bremsanlage erfolgt.

In der dargestellten Ausgestaltung handelt es sich um eine hydraulische Bremsanlage. Dabei ist die Betätigungseinrichtung 106 über einen Bremskraftverstärker 108 mit einem Hauptbremszylinder 109 verbunden. Über den Bremskraftverstärker 108 kann mittels der Betätigungseinrichtung 106 ein Vordruck in dem Hauptbremszylinder 109 aufgebaut werden, der über in der Figur 1 nicht dargestellte Druckleitungen zu den Radbremsen 105a-d übertragen werden kann. Aufgrund der Druckbeaufschlagung erzeugen die Radbremsen 105a-d jeweils ein Bremsmoment, mit dem das zugehörige Rad 102a-d abgebremst wird.

Der Aktor ist in der dargestellten Ausgestaltung als eine Hydraulikeinheit 107 ausgeführt, die zwischen den Hauptbremszylinder 109 und die Radbremsen 105a-d geschaltet ist. Die Hydraulikeinheit 107 kann in einer dem Fachmann an sich bekannten Art ausgestaltet sein und eine Anordnung aus Ventilen sowie eine als Pumpe ausgestaltete Druckquelle umfassen. Durch eine entsprechende Ansteuerung der Ventile lassen sich die Druckverbindungen zwischen einzelnen Radbremsen 105a-d und dem Hauptbremszylinder 109 trennen. Unter Verwendung der Pumpe und anhand einer entsprechenden Ventilsteuerung kann der Bremsdruck in einzelnen Radbremsen 105a-d gegen einen von dem Fahrer in dem Hauptbremszylinder 109 eingestellten Vordruck verringert werden. Optional kann mithilfe der Pumpe auch Hydraulikflüssigkeit aus dem Hauptbremszylinder 109 in einzelne Radbremsen 105a-d gefördert werden, um den Bremsdruck in diesen Radbremsen 105a-d gegenüber der Fahrervorgabe zu erhöhen bzw. fahrerunabhängig ein Bremsmoment zu erzeugen. Derartige Hydraulikeinheiten 107 sind üblicherweise auch Bestandteil von an sich bekannten Fahrdynamikregelsystemen, die bereits in einer Vielzahl von Fahrzeugen eingesetzt werden.

Die Hydraulikeinheit 107 ist mit einer Steuereinrichtung 110 verbunden, die dazu in der Lage ist, Steuerbefehle an die Hydraulikeinheit 107 zu senden, die von der Hydraulikeinheit 107 umgesetzt werden. Vorzugsweise ist die Steuereinrichtung 110 in einem Steuergerät enthalten, das einen Mikroprozessor zur Ausführung von Programmen umfasst, deren Programmcode in dem Steuergerät gespeichert ist. Die Steuereinrichtung 110 ist vorzugsweise als ein in dem Steuergerät ausgeführtes Programm ausgestaltet. Darüber hinaus können weitere Programme in dem Steuergerät bereitgestellt werden. Ein Beispiel hierfür ist eine an sich bekannte Fahrdynamikregelung, etwa ein ESP-System. Die in den Programmen vorgesehenen Algorithmen werden innerhalb des Steuergeräts in der Regel schleifenweise abgearbeitet, wobei eine Schleife in einem oder mehreren Taktschritten (Loop) einmal durchlaufen wird, um ggf. ein Ausgangssignal zu erzeugen. Die Dauer eines Loops ist vorgegeben und beträgt beispielsweise zwischen fünf Millisekunden und zwanzig Millisekunden.

Die Steuereinrichtung 110 erhält Signale verschiedener Sensoren des Fahrzeugs 101, die beispielsweise über einen Datenbus mit dem Steuergerät verbunden sind. Hierbei handelt es sich vor allem um Fahrzustandssensoren, die einen Gierratensensor 111 zur Erfassung der Gierrate *d*ψ/*dt* des Fahrzeugs 101 sowie einen Querbeschleunigungssensor 112 zur Erfassung der Querbeschleunigung *a_{y}* des Fahrzeugs 101 umfassen. Darüber hinaus ist ein Lenkwinkelsensor 113 zur Bestimmung des Radeinschlagswinkels der Vorderräder 102a,b vorgesehen sowie ein weiterer Sensor, mit dem eine Bremsbetätigung des Fahrers des Fahrzeugs 101 feststellbar ist. Hierbei kann es sich beispielsweise um einen Drucksensor 114 handeln, der den im Hauptbremszylinder 109 von dem Fahrer eingestellten Vordruck erfasst. Ferner wird die Längsgeschwindigkeit des Fahrzeugs 101 bestimmt, beispielsweise anhand von Signalen von Raddrehzahlsensoren 115a-d, die an in den Rädern 102a-d des Fahrzeugs 101 angeordnet sind. Die zuvor genannten Sensoren sind üblicherweise auch Bestandteil von Fahrdynamikregelsystemen. Bei vorhandenem Fahrdynamikregelsystem muss das Fahrzeug 101 somit nicht mit zusätzlichen Sensoren ausgerüstet werden.

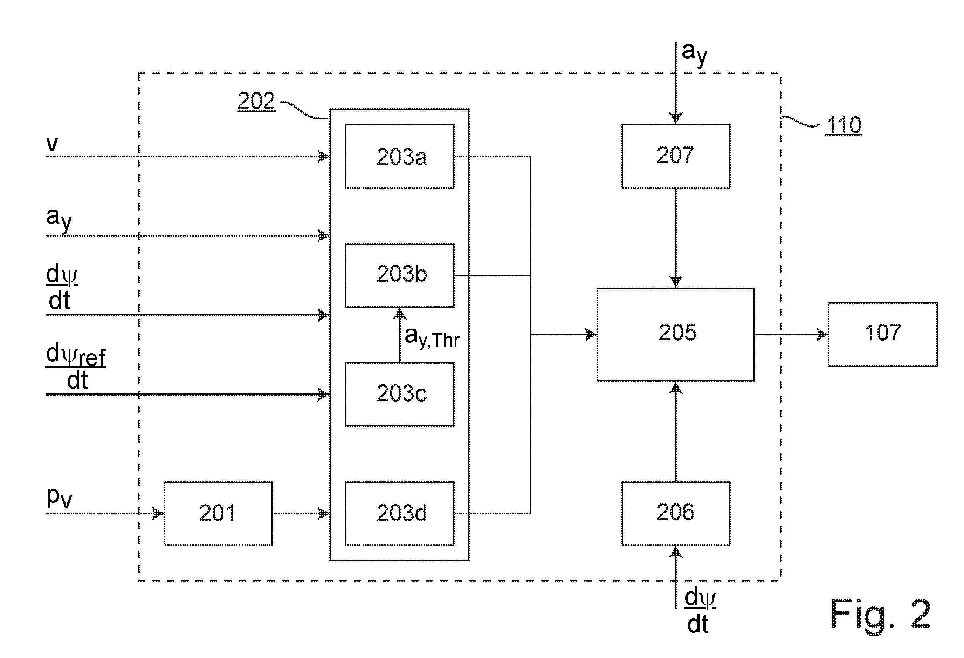

Figur 2 zeigt in einer schematischen Blockdarstellung eine Ausgestaltung der Steuereinrichtung 110. Die Steuereinrichtung 110 nimmt eine Steuerung der Hydraulikeinheit 107 während von dem Fahrer gesteuerter Bremsvorgänge vor. Daher wird die Steuereinrichtung 110 bei einer Bremsenbetätigung des Fahrers aktiviert. Diese wird in dem Block 201 anhand der Signale *pᵥ* des Drucksensors 114 ermittelt. Zusätzlich kann es für die Aktivierung der Steuereinrichtung 110 erforderlich sein, dass der Vordruck *pᵥ* einen Minimaldruck überschreitet, was ebenfalls in dem Block 201 überprüft werden kann.

Wenn die Steuereinrichtung 110 aktiviert ist, werden mithilfe der Hydraulikeinheit 107 stabilisierende Eingriffe in die Bremsanlage des Fahrzeugs 101 vorgenommen, wenn eine Instabilität des Fahrzeugs 101 während einer verzögerten Kurvenfahrt festgestellt wird. Zur Stabilisierung des Fahrzeugs 101 wird das Bremsmoment am kurveninneren Hinterrad 102c,d gegenüber dem Bremsmoment am kurvenäußeren Hinterrad 102c,d verringert. Hierdurch kann insbesondere Übersteuertendenzen des Fahrzeugs 101 entgegengewirkt werden.

Um eine Differenz zwischen den Bremsmomenten am kurveninneren und kurvenäußeren Hinterrad 102c,d einzustellen, wird vorzugsweise ein zweistufiges Vorgehen gewählt. In einer ersten Stufe wird das Bremsmoment an dem kurveninneren Hinterrad 102c,d in einem Zeitpunkt konstant gehalten, während das Bremsmoment am kurvenäußeren Hinterrad 102c,d der Fahrervorgabe folgt. Hierdurch ergibt sich eine Bremsmomentendifferenz, wenn der Fahrer das Bremsmoment nach dem genannten Zeitpunkt erhöht. Um das Bremsmoment an dem kurveninneren Hinterrad 102c,d bei ansteigendem Vordruck konstant zu halten, wird in der zuvor beschriebenen hydraulischen Bremsanlage die Verbindung zwischen dem Hauptbremszylinder 109 und der dem kurveninneren Hinterrad 102c,d zugeordneten Radbremse 105c,d unterbrochen, so dass der Bremsdruck in dieser Radbremse 105c,d konstant gehalten wird. Der Betrieb der in der Hydraulikeinheit 107 enthaltenen Pumpe, der von dem Fahrer in der Regel aufgrund von Geräuschentwicklungen und Vibrationen deutlich spürbar ist, kann unterbleiben. Darüber hinaus ist in der gesperrten Radbremse 105c,d in der Regel nur relativ wenig Hydraulikflüssigkeit eingesperrt. Durch diese geringe Volumenaufnahme der Radbremse 105c,d kann die Bremsanlage von dem Fahrer in der Regel in normaler Weise bedient werden, insbesondere spürt der Fahrer in der Regel kein verändertes Pedalgefühl. Damit ist der Bremseneingriff für den Fahrer nicht oder kaum wahrnehmbar, und der Fahrkomfort wird nicht beeinträchtigt.

Wenn das Fahrzeug 101 durch den zuvor beschriebenen Eingriff in der ersten Stufe nicht ausreichend stabilisiert werden kann, wird in der zweiten Stufe das Bremsmoment am kurveninneren Hinterrad 102c,d verringert. Hierdurch wird die Bremsmomentendifferenz erhöht, wodurch auch das aufgrund der Bremsmomentendifferenz auf das Fahrzeug 101 wirkende stabilisierende Drehmoment erhöht wird. Die Verringerung des Bremsmoments am kurveninneren Hinterrad 102c,d kann sukzessive wiederholt werden, bis eine Stabilisierung des Fahrzeugs 101 erreicht wird oder sich eine maximale Bremsmomentendifferenz eingestellt hat. In der zuvor erläuterten hydraulischen Bremsanlage wird der Bremsdruck in der dem kurveninneren Hinterrad 102c,d zugeordneten Radbremse 105c,d verringert, um das von dieser Radbremse 105c,d erzeugte Bremsmoment zu reduzieren. Dabei wird eine Verringerung des Bremsdrucks dadurch herbeigeführt, dass Hydraulikflüssigkeit bei geeigneter Ventilstellung mithilfe der Pumpe gegen den von dem Fahrer eingestellten Vordruck aus der Radbremse 105c,d gepumpt wird. Aufgrund eines Betriebs der in der Hydraulikeinheit 107 enthaltenen Pumpe können Komforteinbußen für den Fahrer in der zweiten Stufe nicht vollständig vermieden werden.

Bei einer verzögerten Kurvenfahrt auftretende Instabilitäten des Fahrzeugs 101 wird anhand von Aktivierungskriterien erkannt, die in einer Aktivierungseinrichtung 202 der Steuereinrichtung 110 überwacht werden. Hierzu umfasst die Aktivierungseinrichtung 202 in einer Ausgestaltung vier Module, die in Figur 2 als Blöcke 203a-d dargestellt sind und jeweils ein Aktivierungskriterium überwachen. Ein Bremseneingriff wird vorzugsweise dann vorgenommen, wenn anhand wenigstens eines Aktivierungskriteriums eine instabile Fahrsituation erkannt worden ist. In diesem Fall wird von dem entsprechenden Block 203a-d ein Aktivierungssignal an die Aktorsteuerung 205 der Steuerungseinrichtung 110 gesendet, welche daraufhin eine entsprechende Ansteuerung der Hydraulikeinheit 107 vornimmt.

Eingangssignale der Aktivierungseinrichtung 202 sind die mittels des Gierratensensors 111 gemessene Gierrate *d*ψ/*dt* sowie die mittels des Querbeschleunigungssensors 112 gemessene Querbeschleunigung *a_{y}* des Fahrzeugs 101. Ein weiteres Eingangssignal ist die Referenzgierrate *d*ψ*_{ref}*/*dt*. Diese wird in der Berechnungseinrichtung 204 anhand des von dem Fahrer an den Vorderrädern 102a,b eingestellten Radeinschlagswinkels sowie anhand der Fahrzeuggeschwindigkeit und ggf. weiterer Größen unter Verwendung eines Fahrzeugmodells berechnet und entspricht der Sollgierrate des Fahrzeugs 101. In der dargestellten Ausgestaltung wird die Referenzgierrate außerhalb der Steuereinrichtung 110 berechnet. Sofern das Fahrzeug 101 über ein Fahrdynamikregelsystem verfügt, kann es etwa vorgesehen sein, dass die Referenzgierrate in diesem System berechnet und der Steuereinrichtung 110 von diesem System zur Verfügung gestellt wird. Gleichfalls kann jedoch auch eine Berechnung in der Steuereinheit 110 vorgesehen sein.

In dem Block 203a wird vorzugsweise ein Aktivierungssignal erzeugt, wenn ein Übersteuern des Fahrzeugs 101 festgestellt worden ist. Hierzu wird in einer Ausgestaltung der Betrag der gemessenen Gierrate *d*ψ/*dt* mit dem Betrag der Referenzgierrate *d*ψ*_{ref}*/*dt* verglichen. Ein Übersteuern wird festgestellt, wenn die Differenz |*d*ψ/*dt*|-|*d*ψ*_{ref}*/*dt*| zwischen dem Betrag der Gierrate *d*ψ/*dt* und dem Betrag der Referenzgierrate *d*_{ψ*ref*}/*dt* einen Schwellenwert überschreitet. Dieser liegt beispielsweise zwischen 1 Grad pro Sekunde und 5 Grad pro Sekunde, vorzugsweise bei 2 Grad pro Sekunde.

In dem Block 203b wird geprüft, ob der Betrag der erfassten Querbeschleunigung *a_{y}* einen vorgegebenen Schwellenwert *a*_{*y*,*Thr*} überschreitet. Ist dies der Fall, wird von dem Block 203b ein Aktivierungssignal an die Aktorsteuerung 205 gesendet. Anhand dieses Aktivierungskriteriums werden verzögerte Kurvenfahrten auf einer Fahrbahn mit einem hohen Fahrbahnreibwert erfasst, bei denen das Fahrzeug 101 hohen Querbeschleunigungen *a_{y}* ausgesetzt ist. Der Schwellenwert *a*_{*y*,*Thr*} wird von dem Block 203c bereitgestellt.

Der Block 203c ist dazu ausgestaltet, hochdynamische Fahrsituationen zu erkennen, in denen es zu Fahrzeuginstabilitäten kommen kann. Dies geschieht in dem Block 203c durch eine Auswertung der Gierbeschleunigung des Fahrzeugs 101. Die Gierbeschleunigung kann aus der mittels des Gierratensensors 111 gemessenen Fahrzeuggierrate *d*ψ/*dt* bestimmt werden. In dem beispielhaft in Figur 2 gezeigten System wird die zeitliche Ableitung der Gierrate *d*ψ/*dt* in dem Block 203c innerhalb der Aktivierungseinrichtung 202 ermittelt. Gleichfalls kann es jedoch vorgesehen sein, dass die Gierbeschleunigung an anderer Stelle aus der Gierrate *d*ψ/*dt* berechnet wird und das Ergebnis an die Aktivierungseinrichtung 202, insbesondere an den Block 203c, übermittelt wird. Darüber hinaus kann es in einer alternativen Ausgestaltung vorgesehen sein, dass anstelle der Berechnung der Gierbeschleunigung eine Messung mittels eines entsprechenden Drehbeschleunigungssensors vorgenommen wird und die Messsignale dieses Sensors dem Block 203c der Aktivierungseinrichtung 202 verfügbar gemacht werden.

In dem Block 203c wird der Betrag der Gierbeschleunigung mit einem Schwellenwert verglichen. Hierbei kann es sich um einen fest vorgegebenen Schwellenwert handeln. Vorzugsweise wird jedoch ein geschwindigkeitsabhängiger Schwellenwert zugrunde gelegt, der mit zunehmender Geschwindigkeit des Fahrzeugs 101 kleiner wird. Hierdurch wird berücksichtigt, dass hohe Gierbeschleunigungen bei höheren Fahrzeuggeschwindigkeiten mit einer größeren Wahrscheinlichkeit zu Fahrzeuginstabilitäten führen.

Wenn die Gierbeschleunigung betragsmäßig unter dem Schwellenwert liegt, dann wird in dem Block 203b ein Grundschwellenwert für die Querbeschleunigung zugrunde gelegt, der von dem Block 203c an den Block 203b gemeldet wird. Der Grundschwellenwert liegt in einer Ausgestaltung zwischen 0,6 g und 1,2 g, vorzugsweise bei 0,8 g (g = Erdbeschleunigung). Wenn die Gierbeschleunigung betragsmäßig den Schwellenwert überschreitet, dann wird in dem Block 203c eine reduzierte Querbeschleunigungsschwelle bestimmt, die in dem Block 203b für den Vergleich zwischen der Querbeschleunigung und dem Schwellenwert herangezogen wird. Die reduzierte Schwelle wird ausgehend von dem Grundschwellenwert bestimmt. Dieser Grundschwellenwert wird um einen Betrag verringert, der in Abhängigkeit von der Gierbeschleunigung ermittelt wird. Hierzu wird eine entsprechende in der Steuereinrichtung 110 hinterlegte Vorschrift zur Bestimmung des Betrags verwendet.

Durch die gierbeschleunigungsabhängige Reduzierung der Querbeschleunigungsschwelle wird berücksichtigt, dass ein Rückgang der Querbeschleunigung im Falle einer hohen Gierbeschleunigung in der Regel kein Anzeichen für eine Stabilisierung des Fahrzeugs 101 ist. So kann die Querbeschleunigung beispielsweise auch bei einer hohen Gierbeschleunigung sinken, wenn sich der Fahrbahnreibwert verringert. In derartigen Fahrsituationen wird somit eine Stabilisierung des Fahrzeugs 101 gewährleistet.

Der Block 203d dient dazu, Fahrsituationen zu erkennen, in denen das Fahrzeugverhalten von einem untersteuernden Verhalten in ein übersteuerndes Verhalten übergeht. Derartige Situationen, zu denen es insbesondere bei niedrigen Fahrbahnreibwerten, wie etwa bei Nässe, kommen kann, stellen regelmäßig hohe Anforderungen an den Fahrer des Fahrzeugs 101. Oftmals ist das Fahrzeug 101 in solchen Situationen von durchschnittlich geübten Fahrern nicht beherrschbar. Wenn ein derartiges Fahrzeugverhalten in Block 203d festgestellt worden ist, dann wird ein Aktivierungssignal an die Aktorsteuerung 205 gesendet.

Zur Erkennung von Fahrsituationen der zuvor beschriebenen Art wird in dem Block 203d die Differenz zwischen der mittels des Gierratensensors 111 gemessenen Gierrate *d*ψ/*dt* des Fahrzeugs 101 und der berechneten Referenzgierrate *d*ψ*_{ref}*/*dt* ausgewertet. Bei dieser Differenz handelt es sich um die Regelabweichung, die üblicherweise einer Fahrdynamikregelung zugrunde liegt und von dieser ausgeregelt wird. In einer Ausgestaltung wird die Gierratendifferenz in dem Block 203d zunächst herangezogen, um ein untersteuerndes Fahrverhalten des Fahrzeugs 101 zu ermitteln. Ein solches Fahrverhalten wird festgestellt, wenn der Betrag der Gierrate *d*ψ/*dt* des Fahrzeugs 101 um einen vorgegebenen Betrag geringer ist als die Referenzgierrate *d*ψ*_{ref}*/*dt.* Alternativ kann ein untersteuerndes Fahrverhalten auch in einer anderen, dem Fachmann bekannten Art und Weise ermittelt werden.

Wenn ein untersteuerndes Fahrverhalten des Fahrzeugs 101 festgestellt worden ist, wird in dem Block 203d überwacht, ob ein Wechsel in ein übersteuerndes Fahrverhalten erfolgt. Hierzu wird das Gierratendifferenzsignal durch ein Tiefpassfilter gefiltert. Das gefilterte Signal wird dann mit der ungefilterten Gierratendifferenz verglichen. Ein Aktivierungssignal wird in dem Block 203d erzeugt und an die Aktorsteuerung 205 gesendet, wenn der Betrag der ungefilterten Gierratendifferenz um einen vorgegebenen Prozentsatz geringer ist als der Betrag der gefilterten Gierratendifferenz. In diesem Fall ist davon auszugehen, dass sich das Fahrverhalten des Fahrzeugs 101 einem übersteuernden Verhalten nähert. Der Prozentsatz liegt beispielsweise zwischen 20% und 40%, vorzugsweise bei 30%.

Für das Tiefpassfilter wird vorzugsweise eine Zeitkonstante zwischen 250 ms und 400 ms, etwa eine Zeitkonstante von ca. 350 ms gewählt. Damit liegt die Zeitkonstante in der Größenordnung der Zeitkonstanten eines typischen Fahrzeugs 101, so dass sich das Fahrzeugverhalten mittels des Tiefpassfilters nachbilden lässt. Das Tiefpassfilter ist in einer Ausgestaltung als ein Verzögerungsglied erster Ordnung (P-T₁-Glied) ausgeführt.

Nachdem die Aktorsteuerung 205 ein Aktivierungssignal von einem der Blöcke 203a-d erhalten hat, steuert sie die Hydraulikeinheit 107 derart, dass die Bremskraft an dem kurveninneren Hinterrad 102c,d konstant gehalten wird und von dem Fahrer nicht weiter erhöht werden kann. Dies geschieht durch die bereits beschriebene Steuerung der Ventile der Hydraulikeinheit 107. Das kurveninnere Hinterrad 102c,d wird von der Aktorsteuerung 205 anhand eines kurvenrichtungssensitiven Messsignals ermittelt. Hierbei kann es sich um den Radeinschlagswinkel der Vorderräder 102a,b, um die Querbeschleunigung *a_{y}* des Fahrzeugs 101 oder die Gierrate *dψ*/*dt* des Fahrzeugs 101 handeln. Gleichfalls können mehrere der zuvor genannten Größen herangezogen werden, um die Kurvenrichtung zu ermitteln.

Während die Bremskraft an dem kurveninneren Hinterrad 102c,d mithilfe der Hydraulikeinheit 107 konstant gehalten wird, wird in der Steuereinrichtung 110 geprüft, ob sich das Fahrzeug 101 aufgrund des vorgenommenen Eingriffs stabilisiert oder ob eine hinreichende Stabilisierung des Fahrverhaltens des Fahrzeugs 101 nicht erfolgt. Letzteres wird vorzugsweise festgestellt, wenn trotz des Eingriffs ein übersteuerndes Fahrverhalten des Fahrzeugs 101 festgestellt wird. Dies erfolgt durch eine Auswertung des in dem Block 203a erzeugten Aktivierungssignals, welches wie zuvor beschrieben in Abhängigkeit von dem Vergleich zwischen der gemessenen Gierrate *d*ψ/*dt* des Fahrzeugs 101 und der Referenzgierrate *dψ_{ref}*/*dt* generiert wird.

Wenn das in dem Block 203a erzeugte Aktivierungssignal in der Aktorsteuerung 205 vorliegt, das heißt, wenn trotz des von der Aktorsteuerung 205 gesteuerten Eingriffs in die Bremsanlage ein übersteuerndes Fahrverhalten vorliegt, dann steuert die Aktorsteuerung 205 die Hydraulikeinheit 107 derart, dass die Bremskraft an dem kurveninneren Hinterrad 102c,d reduziert wird. Hierzu werden die Ventile sowie die Pumpe der Hydraulikeinheit 107, wie bereits beschrieben, geeignet angesteuert.

Vorzugsweise ist der Betrag, um den die Bremskraft an dem kurveninneren Hinterrad 102c,d in einem Schritt reduziert wird bzw. um den der Bremsdruck verringert wird, fest vorgegeben. Beispielsweise kann es bei der hydraulischen Bremsanlage vorgesehen sein, den Bremsdruck in der Radbremse 105c,d in einem Schritt um einen Betrag zwischen 3 bar und 7 bar, vorzugsweise um einen Betrag von 5 bar, zu reduzieren. Ferner ist vorzugsweise eine maximale Dauer für die Druckabsenkung vorgegeben. Damit kann die Hydraulikeinheit 107 bzw. die enthaltene Pumpe nach der vorgegeben Zeitdauer abgeschaltet werden, wenn eine Druckreduzierung um den vorgegebenen Betrag aufgrund eines zu geringen Bremsdrucks in der relevanten Radbremse 105c,d nicht vorgenommen werden kann. In einer Ausgestaltung liegt die Zeitdauer zwischen 200 ms und 300 ms, vorzugsweise bei 250 ms.

Sofern nach der ersten Reduzierung der Bremskraft weiterhin oder erneut ein Aktivierungssignal von dem Block 203b empfangen wird, das heißt, wenn weiterhin oder erneut ein übersteuerndes Fahrverhalten festgestellt wird, dann erfolgt in einem weiteren Schritt eine weitere Reduzierung der Bremskraft an dem kurveninneren Hinterrad 102c,d. Die Bremskraft wird dabei in der gleichen Weise reduziert wie bei dem vorangegangenen Schritt. Nachfolgend können sich weitere Schritte anschließen, in denen die Bremskraft an diesem Fahrzeugrad 102c,d weiter verringert wird.

Eine Verringerung der Druckdifferenz erfolgt bei abnehmender Gierrate *d*ψ/*dt* des Fahrzeugs 101. Um eine abnehmende Gierrate festzustellen, wird diese in dem Block 206 überwacht. Eine Abnahme der Gierrate wird in dem Block 206 in einer Ausgestaltung dann festgestellt, wenn sich das Vorzeichen der Gierrate *d*ψ/*dt* von dem Vorzeichen der Gierbeschleunigung unterscheidet. Dies erlaubt eine sehr zuverlässige Feststellung einer abnehmenden Gierrate. Gleichfalls kann es jedoch beispielsweise auch vorgesehen sein, dass der Betrag des in dem aktuellen Loop ermittelten Gierratenwerts mit dem Betrag des im vorangegangenen Loop ermittelten Gierratenwerts verglichen wird. Wenn eine abnehmende Gierrate *d*ψ/*dt* in dem Block 206 ermittelt worden ist, wird dies an die Aktorsteuerung 205 gemeldet.

Darüber hinaus ist in der Steuereinrichtung 110 ein Block 207 enthalten, welcher prüft, ob ein Regelaustrittskriterium erfüllt ist. Dies ist in einer Ausgestaltung der Fall, wenn die Querbeschleunigung *a_{y}* des Fahrzeugs 101 kleiner ist als ein vorgegebener Austrittsschwellenwert oder als das um einen vorgegebenen Betrag verringerte Querbeschleunigungsmaximum. Der Austrittsschwellenwert liegt in einer Ausgestaltung zwischen 0 und 0,3 g, vorzugsweise bei 0,1 g. Bei dem Querbeschleunigungsmaximum handelt es sich um den maximalen Betrag der Querbeschleunigung bei dem vorliegenden Fahrmanöver, d.h. seit dem Eintritt in die Regelung. Das Querbeschleunigungsmaximum wird in dem Block 206 durch eine fortlaufende Überwachung der Fahrzeugquerbeschleunigung *a_{y}* ermittelt. Die auf dem Querbeschleunigungsmaximum beruhende Querbeschleunigungsschwelle, die für einen Regelungsaustritt maßgeblich ist, entspricht in einer Ausgestaltung dem um 0,2 g reduzierten Querbeschleunigungsmaximum. Wenn in dem Block 207 festgestellt worden ist, dass die Regelaustrittsbedingung erfüllt ist, wird dies an die Aktorsteuerung 205 gemeldet.

Wenn die Regelaustrittsbedingung nicht erfüllt ist, jedoch von dem Block 206 eine abnehmende Gierrate *d*ψ/*dt* gemeldet wird, dann wird die Bremskraftdifferenz an den Hinterrädern 102c,d des Fahrzeugs 101 von der Aktorsteuerung 205 reduziert. Hierzu steuert die Aktorsteuerung 205 die Hydraulikeinheit 107 derart, dass die Bremskraft an dem kurveninneren Hinterrad 102c,d erhöht wird. In einem ersten Schritt erfolgt dabei eine Bremskrafterhöhung um einen vorgegebenen Betrag, der geringer als die Bremskraftdifferenz ist. Um die Bremskraft an dem kurveninneren Hinterrad 102c,d bei der beschriebenen hydraulischen Bremsanlage zu erhöhen, wird der Bremsdruck in der Radbremse 105c,d des kurveninneren Hinterrads 102c,d dadurch erhöht, dass die getrennte Verbindung zu dem Hauptbremszylinder 109 geöffnet wird. Ein aktiver Bremsdruckaufbau mittels der in der Hydraulikeinheit 107 enthaltenen Pumpe ist nicht erforderlich, da der Betrag, um den der Bremsdruck erhöht wird, geringer ist als die Bremsdruckdifferenz an den Hinterrädern 102c,d.

Wenn von dem Block 206 eine abnehmende Gierrate *d*ψ/*dt* gemeldet wird und der Block 207 meldet, dass die Regelaustrittsbedingung erfüllt ist, dann steuert die Aktorsteuerung 205 die Hydraulkeinheit so, dass die Bremskräfte an den Hinterrädern 102c,d einander angeglichen werden. Dies geschieht ebenfalls dadurch, dass eine Bremskrafterhöhung an dem kurveninneren Hinterrad 102c,d zugelassen wird. Bei der hydraulischen Bremsanlage wird hierzu wiederum die zuvor getrennte Verbindung der entsprechenden Radbremse 105c,d zum Hauptbremszylinder 109 geöffnet.

Sofern durch die mittels der Aktorsteuerung 205 gesteuerten Eingriffe in die Bremsanlage des Fahrzeugs 101 keine Stabilisierung des Fahrzeugs 101 erzielt werden kann, vergrößert sich die Abweichung zwischen dem Sollverhalten des Fahrzeugs 101 und seinem tatsächlichen Verhalten. Hat diese Abweichung ein bestimmtes Maß erreicht, erfolgen Regeleingriffe des Fahrdynamikregelsystems des Fahrzeugs 101, sofern dieses vorhanden ist. Im Zusammenspiel mit einem solchen Fahrdynamikregelsystem sind die mittels der Steuereinrichtung 110 vorgenommenen Eingriffe den Regeleingriffen des Fahrdynamikregelsystems vorgeschaltet. In vielen Fällen können dadurch Regeleingriffe des Fahrdynamikregelsystems, die, wie zuvor erläutert, mit Komforteinbußen für den Fahrer verbunden sind, vermieden werden, da das Fahrzeug 101 stabilisiert werden kann, bevor die Regeleintrittsschwellen der Fahrdynamikregelung erreicht werden.

Obwohl die Erfindung in der vorausgegangenen Darstellung und den Zeichnungen im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt. Des Weiteren ist es erfindungsgemäß angedacht das Verfahren auf mindestens einer Achse, der Vorder- und/oder Hinterachse und/oder auf beiden Achsen einzusetzen.

Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten beziehungsweise Einrichtungen ausführen.

In den Patentansprüchen angegebene Bezugszeichen sind nicht als Beschränkungen der eingesetzten Mittel und Schritte anzusehen.

## Patentansprüche

1. Verfahren zum Stabilisieren eines Fahrzeugs (101) mit einer Bremsanlage, die von einem Fahrer des Fahrzeugs (101) betätigbar ist, um an wenigstens zwei Fahrzeugrädern (102a-d) eine Bremskraft zu bewirken, wobei während einer Bremsenbetätigung des Fahrers an einem ersten Fahrzeugrad (102a-d) einer Achse ein Aufbau einer der Fahrervorgabe entsprechenden Bremskraft zugelassen wird und an einem zweiten Fahrzeugrad (102a-d) der Achse eine gegenüber der Fahrervorgabe verringerte Bremskraft eingestellt wird, wenn die Erfüllung eines Aktivierungskriteriums festgestellt wird, **dadurch gekennzeichnet, dass** die Erfüllung eines Aktivierungskriteriums festgestellt wird, wenn bei oder nach einem ermittelten untersteuernden Fahrzeugverhalten ermittelt wird, dass ein gefilterter Wert einer Abweichung zwischen einer erfassten Gierrate und einer modellbasierten Sollgierrate einen ungefilterten Wert der Abweichung um mehr als einen vorbestimmten Wert überschreitet.

2. Verfahren nach Anspruch 1, wobei es sich bei der Achse um eine Hinterachse des Fahrzeugs (101) und bei dem zweiten Fahrzeugrad um das kurveninnere Hinterrad (102c,d) handelt.

3. Verfahren nach Anspruch 1 oder 2, wobei eine von dem Fahrer in einem Zeitpunkt an dem zweiten Fahrzeugrad (102a-d) eingestellte Bremskraft gehalten wird, um in späteren Zeitpunkten die Bremskraft gegenüber der Fahrervorgabe zu verringern.

4. Verfahren nach Anspruch 3, wobei die Bremsanlage Radbremsen (105a-d) umfasst, welche den Fahrzeugrädern (102a-d) zugeordnet sind und Druckmittel aufnehmen können, um eine Bremskraft zu erzeugen, und wobei die Radbremse (105a-d) des zweiten Fahrzeugrads (105a-d) abgesperrt wird, um die Bremskraft konstant zu halten.

5. Verfahren nach Anspruch 3 oder 4, wobei die Bremskraft gegenüber der gehaltenen Bremskraft verringert wird, wenn festgestellt wird, dass aufgrund der konstant gehaltenen Bremskraft keine ausreichende Stabilisierung des Fahrzeugs (101) erreicht worden ist.

6. Verfahren nach Anspruch 5, bei dem die Bremskraft verringert wird, wenn ein Übersteuern des Fahrzeugs (101) festgestellt wird, während die Bremskraft konstant gehalten wird.

7. Verfahren nach einem der vorangegangenen Ansprüche, bei dem die Erfüllung eines Aktivierungskriteriums festgestellt wird, wenn ein Betrag einer Querbeschleunigung des Fahrzeugs (101) einen vorgegebenen ersten Schwellenwert überschreitet.

8. Verfahren nach Anspruch 7, bei dem der erste Schwellenwert in Abhängigkeit von einer Gierbeschleunigung des Fahrzeugs (101) ermittelt wird, wobei insbesondere mit steigender Gierrate eine Verringerung des ersten Schwellenwerts vorgenommen wird.

9. Verfahren nach einem der vorangegangenen Ansprüche, bei dem die Erfüllung eines Aktivierungskriteriums festgestellt wird, wenn ein Übersteuern des Fahrzeugs (101) ermittelt wird.

10. Verfahren nach einem der vorangegangenen Ansprüche, bei dem die Erfüllung eines Aktivierungskriteriums festgestellt wird, wenn ermittelt wird, dass das Fahrzeugverhalten von einem Untersteuern zu einem Übersteuern wechselt.

11. Vorrichtung zum Stabilisieren eines Fahrzeugs (101) mit einer Bremsanlage, die von einem Fahrer des Fahrzeugs (101) betätigbar ist, um an wenigstens zwei Fahrzeugrädern (102a-d) eine Bremskraft zu bewirken, umfassend eine Steuerungseinrichtung (110), die dazu ausgestaltet ist, während einer Bremsenbetätigung des Fahrers aufgrund einer Feststellung, dass wenigstens ein Aktivierungskriterium erfüllt ist, einen Aktor (107) zu steuern, wobei der Aktor (107) dazu ausgestaltet ist, aufgrund der Steuerung an einem ersten Fahrzeugrad (102a-d) einen Aufbau einer der Fahrervorgabe entsprechenden Bremskraft zuzulassen und an einem zweiten Fahrzeugrad (102a-d) der Achse eine gegenüber der Fahrervorgabe verringerte Bremskraft einzustellen, **dadurch gekennzeichnet, dass** die Erfüllung eines Aktivierungskriteriums festgestellt wird, wenn bei oder nach einem ermittelten untersteuernden Fahrzeugverhalten ermittelt wird, dass ein gefilterter Wert einer Abweichung zwischen einer erfassten Gierrate und einer modellbasierten Sollgierrate einen ungefilterten Wert der Abweichung um mehr als einen vorbestimmten Wert überschreitet.

## Claims

1. Method for stabilizing a vehicle (101) having a brake system which can be actuated by a driver of the vehicle (101), in order to bring about a braking force at at least two vehicle wheels (102a-d), a build up of a braking force which corresponds to the driver request being permitted at a first vehicle wheel (102a-d) of an axle during a brake actuation of the driver, and a braking force which is reduced in comparison with the driver request being set at a second vehicle wheel (102a-d) of the axle if the satisfying of an activation criterion is determined, **characterized in that** the satisfying of an activation criterion is determined if, while or after an understeer vehicle behavior is established, it is established that a filtered value of a deviation between a detected yaw rate and a model based setpoint yaw rate exceeds an unfiltered value of the deviation by more than one predetermined value.

2. Method according to Claim 1, the axle being a rear axle of the vehicle (101) and the second vehicle wheel being the rear wheel (102c,d) on the inside of the bend.

3. Method according to Claim 1 or 2, a braking force which is set by the driver at an instant at the second vehicle wheel (102a-d) being maintained, in order to reduce the braking force at later instants in comparison with the driver request.

4. Method according to Claim 3, the brake system comprising wheel brakes (105a-d) which are assigned to the vehicle wheels (102a-d) and can receive pressure medium, in order to generate a braking force, and the wheel brake (105a-d) of the second vehicle wheel (105a-d) being shut off, in order to keep the braking force constant.

5. Method according to Claim 3 or 4, the braking force being reduced in comparison with the maintained braking force if it is determined that sufficient stabilization of the vehicle (101) has not been achieved on account of the braking force which is kept constant.

6. Method according to Claim 5, in which the braking force is reduced if oversteer of the vehicle (101) is determined while the braking force is kept constant.

7. Method according to one of the preceding claims, in which the satisfying of an activation criterion is determined if a magnitude of a transverse acceleration of the vehicle (101) exceeds a predefined first threshold value.

8. Method according to Claim 7, in which the first threshold value is established as a function of a yaw acceleration of the vehicle (101), a reduction in the first threshold value being carried out, in particular, as the yaw rate increases.

9. Method according to one of the preceding claims, in which the satisfying of an activation criterion is determined if oversteer of the vehicle (101) is established.

10. Method according to one of the preceding claims, in which the satisfying of an activation criterion is determined if it is established that the vehicle behavior changes from understeer to oversteer.

11. Device for stabilizing a vehicle (101) having a brake system which can be actuated by a driver of the vehicle (101) in order to bring about a braking force at at least two vehicle wheels (102a-d), comprising a control device (110) which is configured for controlling an actuator (107), during a brake actuation of the driver, on account of a determination that at least one activation criterion is satisfied, the actuator (107) being configured to permit a braking force which corresponds to the driver request to be built up at a first vehicle wheel (102a-d) on account of the control operation, and to set a braking force which is reduced in comparison with the driver request at a second vehicle wheel (102a-d) of the axle, **characterized in that** the satisfying of an activation criterion is determined if, while or after an understeer vehicle behavior is established, it is established that a filtered value of a deviation between a detected yaw rate and a model based setpoint yaw rate exceeds an unfiltered value of the deviation by more than one predetermined value.

## Revendications

1. Procédé pour stabiliser un véhicule (101) avec un système de freinage, qui peut être actionné par un conducteur du véhicule (101), pour appliquer une force de freinage à au moins deux roues du véhicule (102a-d), dans lequel, pendant un actionnement du frein par le conducteur à une première roue du véhicule (102a-d) d'un essieu, on autorise l'établissement d'une force de freinage correspondant à l'ordre du conducteur et on règle à une deuxième roue du véhicule (102a-d) de l'essieu une force de freinage réduite par rapport à l'ordre du conducteur, lorsque l'on constate le respect d'un critère d'activation, **caractérisé en ce que** l'on constate le respect d'un critère d'activation lorsque l'on détermine, lors de ou après la constatation d'un comportement sous-vireur du véhicule, qu'une valeur filtrée d'un écart entre un taux de lacet détecté et un taux de lacet de consigne basé sur un modèle dépasse une valeur non filtrée de l'écart de plus d'une valeur prédéterminée.

2. Procédé selon la revendication 1, dans lequel l'essieu est un essieu arrière du véhicule (101) et la deuxième roue du véhicule est la roue arrière située à l'intérieur de la courbe (102c, d).

3. Procédé selon la revendication 1 ou 2, dans lequel on maintient une force de freinage réglée par le conducteur à un instant à la deuxième roue du véhicule (102a-d), afin de réduire à des instants ultérieurs la force de freinage par rapport à l'ordre du conducteur.

4. Procédé selon la revendication 3, dans lequel le système de freinage comprend des freins de roue (105a-d), qui sont associés aux roues du véhicule (102a-d) et qui peuvent contenir des moyens de pression, afin de produire une force de freinage, et dans lequel le frein de roue (105a-d) de la deuxième roue du véhicule (102a-d) est bloqué afin de maintenir la force de freinage constante.

5. Procédé selon la revendication 3 ou 4, dans lequel la force de freinage est réduite par rapport à la force de freinage maintenue, lorsque l'on constate qu'une stabilisation suffisante du véhicule (101) n'a pas été obtenue sur la base de la force de freinage maintenue constante.

6. Procédé selon la revendication 5, dans lequel on réduit la force de freinage, lorsque l'on constate un sous-virage du véhicule (101) pendant que la force de freinage est maintenue constante.

7. Procédé selon l'une quelconque des revendications précédentes, dans lequel on constate le respect d'un critère d'activation lorsqu'une valeur de l'accélération transversale du véhicule (101) dépasse une première valeur de seuil prédéterminée.

8. Procédé selon la revendication 7, dans lequel on détermine la première valeur de seuil en fonction d'une accélération de lacet du véhicule (101), dans lequel on opère une diminution de la première valeur de seuil en particulier lorsque le taux de lacet augmente.

9. Procédé selon l'une quelconque des revendications précédentes, dans lequel on constate le respect d'un critère d'activation, lorsque l'on détecte un survirage du véhicule (101).

10. Procédé selon l'une quelconque des revendications précédentes, dans lequel on constate le respect d'un critère d'activation, lorsque le comportement du véhicule change d'un sous-virage à un survirage.

11. Dispositif pour stabiliser un véhicule (101) avec un système de freinage, qui peut être actionné par un conducteur du véhicule (101), afin d'appliquer une force de freinage à au moins deux roues du véhicule (102a-d), comprenant un dispositif de commande (110), qui est conçu pour commander un actionneur (107) pendant un actionnement de frein par le conducteur parce qu'il a constaté qu'un critère d'activation est respecté, dans lequel l'actionneur (107) est conçu pour autoriser un établissement d'une force de freinage correspondant à un ordre du conducteur par suite de la commande à une première roue du véhicule (102a-d) et pour régler à une deuxième roue du véhicule (102a-d) de l'essieu une force de freinage réduite par rapport à l'ordre du conducteur, **caractérisé en ce que** le respect d'un critère d'activation est constaté lorsque, lors de ou après la constatation d'un comportement sous-vireur du véhicule, on détermine qu'une valeur filtrée d'un écart entre le taux de lacet et un taux de lacet de consigne dépasse une valeur non filtrée de l'écart de plus d'une valeur prédéterminée.
